# EUROPÄISCHE PATENTANMELDUNG

(11) **EP 1 267 526 A1**
(43) Veröffentlichungstag der Anmeldung: **18.12.2002**
(21) Anmeldenummer: 01114518.2
(22) Anmeldetag: 15.06.2001
(51) Int. Cl.: H04L 12/56

(54) **Verfahren und Vorrichtung zur Speicherung verketteter Listen**

(71) Anmelder: TELEFONAKTIEBOLAGET LM ERICSSON (publ), 126 25 Stockholm (SE)
(72) Erfinder: Linss, Bernhard, 31162 Bad Salzdethfurth (DE); Bergström, Martin, 95008 Campbell (US)
(74) Vertreter: Mohsler, Gabriele

(57) **Zusammenfassung**

Die Erfindung stellt ein Verfahren, eine Vorrichtung, eine Verwendung des Verfahrens und ein Computerprogramm vor, die die Sicherheit verketteter Listen zur Speicherung von Daten erhöhen. Dies wird erreicht durch einen verbesserten Schutz gegen Zerstörung von Daten durch fehlerhafte Zeigerwerte die auf Elemente einer anderen verketteten Liste zeigen. Dazu werden bekannte Verfahren zur Bildung von Prüfsummen, wie beispielsweise Parität und zyklische Blockprüfung, zur Bildung einer zweiten Prüfsumme, die die Prüfung der Zugehörigkeit eines Elementes zu einer verketteten Liste erlauben, verwendet. Ein weiterer Aspekt der Erfindung ist die Bildung einer gemeinsamen Prüfsumme durch Verwendung verschiedener Verfahren für verschiedene Listen.

## Beschreibung

### Technisches Gebiet

Die vorliegende Erfindung betrifft ein Verfahren zur Berechnung von Prüfsummen für Zeigerwerte in Elementen verketteter Listen sowie einen Speicher für verkettete Listen.

### Stand der Technik

Bekannterweise sind verkettete Listen (linked lists) ein Mittel zur Speicherung von Daten, daß sich durch geringe Zugriffszeiten und durch einfachen Aufbau auszeichnet. Verkettete Listen werden beispielsweise in der Encyclopedia of Computer Science, third edition, IEEE press 1993, beschrieben.

Charakteristisches Merkmal verketteter Listen ist, daß jedes Element der Liste einen Zeigerwert enthält, der entweder eine Speicherstelle indiziert, an der das nachfolgende Element gespeichert ist, oder das Ende der Liste anzeigt. Durch diese Listen lassen sich schnelle und wenig aufwendige Speicher organisieren, wie sie beispielsweise in Telekommunikationsnetzen unter anderem zur Speicherung von ATM (Ansynchroner TransferModus) Zellen eingesetzt werden.

So beschreibt beispielsweise das US Patent 5,920,561 den Einsatz verketteter Listen in einen Knoten eines ATM Netzes zur Organisation eines schnellen Speichers.

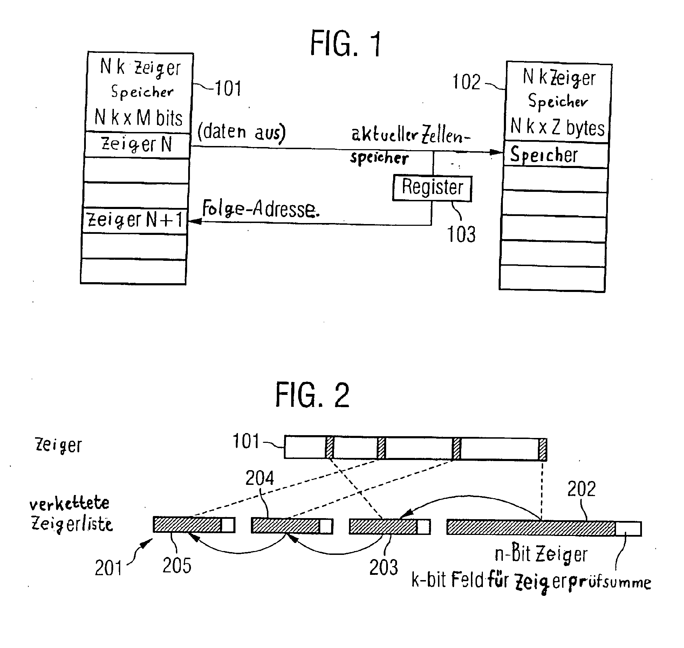

Figur 1 zeigt den Aufbau und die Organisation eines Speichers 102 zur Speicherung von k Datenworten mit einer Länge von Z Bits der durch eine verkettete Liste mit k Elementen und einer Zeigerlänge von M Bytes organisiert wird. Die Figur beinhaltet einen Zeigerspeicher 101, in dem k Zeiger N der Länge M abgelegt werden können, einen Speicher 102, in dem k Datenworte der Länge Z abgelegt werden können sowie ein Register 103. Das Register 103 berechnet die Adresse von Zeigern. Wird ein Datenwort gespeichert, so wird im Zeigerspeicher 101 ein Zeiger gespeichert, der zum einen die Speicheradresse des Datenwortes im Speicher 102 indiziert und zum anderen die Adresse des nachfolgenden Zeigers im Zeigerspeicher 101 enthält. Die Adresse des nachfolgenden Zeigers wird vom Register 103 errechnet.

Ein Nachteil verketteter Listen liegt darin, daß ein fehlerhafter Zeigerwert in einem Element zum Verlust aller nachfolgenden Elemente führt. Um diese Verluste zu vermeiden, muß die Datensicherheit des Zeigerwertes erhöht werden.

Bekannte Verfahren zur Erhöhung der Datensicherheit sind beispielsweise die Bildung von Paritäten (parity) oder zyklische Blockprüfungen (cyclic redundancy check), die ebenfalls in der obengenannten Encyclopedia of Computer Science beschrieben werden.

Figur 2 zeigt einen Zeigerspeicher 101 der eine verkettete Liste von Zeigern 201 mit den Elementen 202, 203, 204 und 205 enthält. Jedes der Elemente besteht aus einem Zeigerwert mit einer Länge von n Bit und einem Prüfsummenfeld der Länge k Bit. Der Zeiger der Länge n indiziert das nachfolgende Element, angedeutet durch einen Pfeil.

Besonders schädlich wirkt sich ein fehlerhafter Zeigerwert aus, wenn er eine Speicherstelle indiziert, an der Daten einer weiteren verketteten Liste gespeichert sind. Dies führt, beispielsweise wenn an dieser Stelle gespeicherte Daten der weiteren Liste durch neue Daten für die erste verkettete Liste überschrieben werden, zum Verlust von Daten der weiteren verketteten Liste. Unter Umständen, wenn beispielsweise ein Zeigerwert der weiteren verketteten Liste überschrieben wird, bedeutet dies den Verlust der Daten aller nachfolgenden Elemente der weiteren Liste. In einem derartigen Fall, gehen Daten zweier verketteter Listen verloren.

Um Datenverluste durch fehlerhafte Zeigerwerten zu vermindern, könnte man eine zweite Prüfsumme über den Zeigerwert bilden. Dies bietet aber keinen Schutz vor Zeigerwerten, die durch mehrfache Bitfehler plausibel erscheinen, aber auf eine andere verkettete Liste zeigen.

Der Erfindung liegt daher die Aufgabe zugrunde, ein Verfahren und eine Vorrichtung vorzustellen, die Datenverluste durch fehlerhafter Zeigerwerte, die Speicherstellen einer anderen verkettete Liste indizieren, auf eine Liste zu beschränken.

### Kurzbeschreibung der Erfindung

Dies wird erfindungsgemäß gelöst durch das Verfahren von Anspruch 1, die Speichervorrichtung nach Anspruch 9, die Verwendung des Verfahrens nach Anspruch 18 und das Computerprogramm nach Anspruch 19.

Vorteilhaft ist die Verwendung einer Prüfsumme zum Schutz vor fehlerhaften Zeigern in anderen verketteten Liste nach Anspruch1. Die Berechnung von Prüfsummen ist dem Fachmann wohlbekannt und somit kann die Erfindung einfach und mit wenig Fehlern in der Umsetzung eingeführt werden.

Weitere vorteilhafte Ausgestaltungen der Erfindung sind den abhängigen Ansprüchen 2 bis 8 und 10 bis 17 zu entnehmen.

Besonders vorteilhaft ist die Berechnung der zweiten Prüfsumme nach verschiedenen Verfahren für verschiedene verkettete Listen nach Anspruch 2. Dies erhöht die Sicherheit mit der fehlerhafte Zuordnung von Elementen zu verketteten Listen erkannt werden.

Weiterhin vorteilhaft ist die Verwendung einer gemeinsamen Prüfsumme anstelle zweier Prüfsummen nach Anspruch 3. Dies vermindert die zu speichernde Datenmenge und erlaubt die Einsparung einer Berechnungseinheit und ermöglicht dennoch die Erkennung fehlerhafter Zuordnungen zu verketteten Listen.

Vorteilhaft ist die Berechnung von Prüfsummen über verschiedene Teile von Zeigern für verschiedene verkettete Listen nach Anspruch 4. Damit wird sowohl die Wahrscheinlichkeit erhöht, mit der ein fehlerhafter Zeigerwert erkannt wird, als auch die Wahrscheinlichkeit, mit der erkannt wird, wenn ein fehlerhafter Zeigerwert auf ein Element einer anderen verketteten Liste zeigt.

Ebenfalls vorteilhaft ist die Berechnung mindestens einer Prüfsumme als Parität gemäß Anspruch 5. Die Berechnung von Paritäten bedarf besonders geringen Rechenaufwandes.

Weiterhin vorteilhaft die Berechnung mindestens einer Prüfsumme als zyklische Bockprüfsumme gemäß Anspruch 6. Zyklische Blockprüfungen erkennen Fehler mit einer besonders hohen Wahrscheinlichkeit.

Besonders vorteilhaft ist die Einbeziehung von Inhalten vorhergehender Elemente in die Berechnung mindestens einer Prüfsumme gemäß Anspruch 7. Dies ermöglicht die Prüfung auf Zugehörigkeit zu derselben verketteten Liste und bietet besondere Sicherheit dadurch, daß die Inhalte vorhergehender Elemente bereits durch Prüfsummen über diese Elemente gesichert wurden.

Weiterhin vorteilhaft ist die Berechnung mindestens einer Prüfsumme die die Anzahl vorhergehender Elemente mit einbezieht gemäß Anspruch 8. Dadurch kann besonders schnell erkannt werden, ob ein Element fehlt beziehungsweise ein zusätzliches Element unberechtigt in eine Liste eingefügt wurde.

### Kurzbeschreibung der Figuren

Folgende Figuren zeigen:
- Figur 1:: einen bekannten Speicher, der durch eine verkettete Liste organisiert wird, (Stand der Technik),
- Figur 2:: eine bekannte verkettete Liste in einem Speicher mit wahlfreiem Zugriff, (Stand der Technik),
- Figur 3:: eine erfindungsgemäße verkettete Liste mit einer ersten und einer zweiten Prüfsumme,
- Figur 4a:: ein erfindungsgemäßes Verfahren zur Berechnung einer gemeinsamen Prüfsumme,
- Figur 4b:: ein weiteres erfindungsgemäßes Verfahren zur Berechnung einer gemeinsamen Prüfsumme,
- Figur 5:: ein erfindungsgemäßes Verfahren zur Berechnung einer zweiten Prüfsumme,
- Figur 6:: ein weiteres erfindungsgemäßes Verfahren zur Berechnung einer zweiten Prüfsumme,
- Figur 7:: eine erfindungsgemäße Speichervorrichtung mit einer gemeinsamen Prüfeinheit, und
- Figur 8:: eine erfindungsgemäße Speichervorrichtung mit einer ersten und einer zweiten Prüfeinheit.

### Ausführliche Beschreibung der Erfindung

Die Erfindung stellt ein Verfahren, eine Vorrichtung, eine Verwendung des Verfahrens und ein Computerprogramm zur Speicherung einer Mehrzahl verketteter Listen. Dabei werden bekannte Verfahren zur Prüfsummenbildung wie beispielsweise Parität und zyklische Blockprüfung auf neue und erfinderische Weise eingesetzt.

Die Überprüfung, ob ein Zeiger auf ein Element einer bestimmten verketteten Liste zeigt, wird durch eine zweite Prüfsumme ermöglicht. Diese zweite Prüfsumme kann beispielsweise eine Listennummer, eine Bitfolge, ein Wert der aus Inhalten vorhergehender Zeiger berechnet wird oder ein Wert der aus der Anzahl vorhergehender Zeiger berechnet wird, sein. Eine weitere Möglichkeit ist die Berechnung der ersten und/oder zweiten Prüfsumme nach verschiedenen Verfahren für verschiedene verkettete Listen. In beiden Fällen, wird ein Element mit fehlerhaftem Zeigerwert, daß durch Mehrfachfehler eine plausible Prüfsumme in einer ersten verketteten Liste hat, in jeder anderen verketten Liste sofort als fehlerhaft erkannt.

Im folgenden wird die Erfindung anhand von Zeichnungen und Ausführungsbeispielen erläutert, dabei bezeichnen gleiche Bezugszeichen gleiche Bestandteile. Die Erläuterungen am Beispiel der Bildung von Paritäten gelten im selben Maße auch für andere Verfahren zur Bildung von Prüfsummen. Die Erfindung ist nicht auf die Bildung von Paritäten beschränkt, sondern bezieht alle Verfahren zur Erstellung von Prüfsummen mit ein, die dem Fachmann bekannt sind, wie beispielsweise die zyklische Blockprüfung.

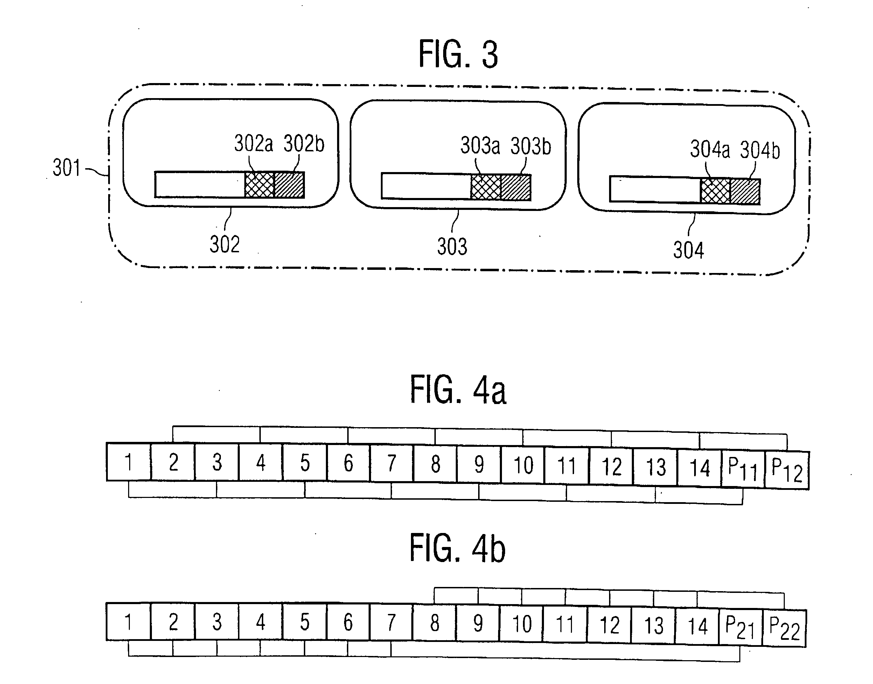

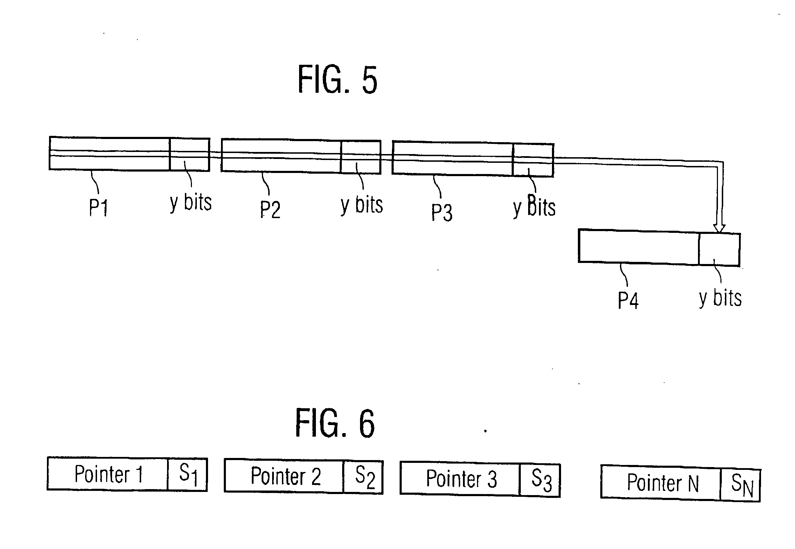

Figur 3 zeigt eine erfindungsgemäße verkettete Liste 301 mit den Elementen 302, 303 und 304. Jedes der Elemente enthält eine erste Prüfsumme 302a, 303a oder 304a, zur Überprüfung des Zeigerwertes, sowie ein zweite Prüfsumme 302b, 303b oder 304b, zur Überprüfung ob das Element zur verketteten Liste gehört, oder nicht. Beispiele dazu, wie diese zweite Prüfsumme gebildet werden kann, werden anhand der Figuren 5 und 6 näher erläutert. Die erste Prüfsumme ist beispielsweise eine Parität oder ein Prüfsumme die durch zyklische Blockprüfung errechnet wurde. Die Bildung der ersten Prüfsumme ist Stand der Technik und dem Fachmann bekannt.

Die zweite Prüfsumme dient zur Überprüfung, ob ein Element zur Liste gehört oder nicht und wird nach einer Vorschrift gebildet, die Inhalte und/oder Anzahl vorhergehender Elemente mit einbezieht. Dadurch wird erreicht, daß ein Element einer anderen Liste sofort als nicht zur verketteten Liste zugehörig erkannt wird, und der Inhalt dieses Elementes wird nicht überschrieben. Somit bleibt der Inhalt des Elementes erhalten und der Verlust diesem Element nachfolgender Elemente wird vermieden.
In einer Ausführungsform der Erfindung besteht die zweite Prüfsumme aus mindestens einem Bit, das einer Bitfolge entnommen wird, wobei jedem Element einer verketteten Liste mindestens ein entsprechendes Bit der Bitfolge zugewiesen wird.
In einer bevorzugten Ausführungsform der Erfindung, werden verschieden Bitfolgen für verschiedene verkettete Listen verwendet. So wird beispielsweise einer ersten verketteten Liste die Bitfolge "010101010101" und einer zweiten verketteten Liste die Bitfolge "111111111111" zugewiesen.

Die Prüfsumme des ersten Elements der ersten verketteten Liste ist somit eine "0", die Prüfsumme des ersten Elements der zweiten verketteten Liste ist somit eine "1". Die Wahrscheinlichkeit mit der ein falsches Element in einer Liste erkannt wird, steigt mit der Länge der Prüfsumme. Bei einer ein Bit Prüfsumme ist in dem vorliegenden Beispiel die Prüfsumme der zweiten Elemente beider verketteten Listen eine "1". Bei einer zwei Bit Prüfsumme sind in dem Beispiel die Prüfsummen immer verschieden, "01" bzw. "11".

In einer bevorzugten Ausführungsform werden die Bitfolgen und die Länge der Prüfsummen so gewählt, daß eine sichere Unterscheidung verschiedener verketteter Listen möglich ist. In dem vorliegenden Beispiel mit zwei verketteten Listen und einer ein Bit Prüfsumme sind das die Bitfolgen "000000000000" und "111111111111", sogenannte orthogonale Bitfolgen. Orthogonale Bitfolgen sind dem Fachmann aus CDMA (Code Division Multiple Access) Verfahren bekannt.

In einer weiteren Ausführungsform werden die Elemente einer Bitfolge Elementen einer verketteten Liste durch eine Modulo-Operation zugeordnet.

In einer anderen Ausführungsform werden für verschiedene Listen verschieden lange Bitfolgen verwendet, wobei die Modulo-Operation mit einem Operanden durchgeführt wird, der der jeweiligen Bitfolgenlänge entspricht.

In einer bevorzugten Ausführungsform werden Prüfsummen über Teile eines Zeiger gebildet, wobei unterschiedliche Aufteilungen für unterschiedliche Listen verwendet werden.

Die Figuren 4a und 4b zeigen Ausführungsbeispiele von Verfahren zur Bildung einer gemeinsamen Prüfsumme. Das Verfahren funktioniert für jede Prüfsumme, beispielsweise die erste oder die zweite Prüfsumme. Die gemeinsame Prüfsumme dient zur Überprüfung eines Zeigerwertes und zur Überprüfung ob ein Element zu einer anderen verketteten Liste gehört. Dazu wird die gemeinsame Prüfsumme über den Zeigerwert für verschiedene verkettete Listen nach verschiedenen Vorschriften gebildet.

In dem Beispiel von Figur 4a, wird eine zwei Bit Parität über einen vierzehn Bit Zeigerwert gebildet. Die Parität für das erste Prüfbit P11 wird über Bits an den ungeraden Stellen des Zeigerwertes gebildet. Die Parität für das zweite Prüfbit P12 wird über Bits an den geraden Stellen des Zeigerwertes gebildet. Dieser Vorgang wird in der Zeichnung durch Pfeile illustriert.

In dem Beispiel von Figur 4b, wird ebenfalls eine zwei Bit Parität über einen vierzehn Bit Zeigerwert gebildet.
Dabei wird das erste Prüfbit P21 als Parität über die ersten sieben Bit gebildet und das zweite Prüfbit P22 als Parität über die Bits acht bis vierzehn.

Die Figuren 4a und 4b stellen zur zwei Möglichkeiten dar, wie ein Zeigerwert aufgeteilt werden kann. Grundsätzlich kann jede Aufteilung, auch in mehr als zwei Teile für das Verfahren verwendet werden.

In einer weiteren Ausführungsform der Erfindung, können auch verschiedenen Paritäten, beispielsweise gerade und ungerade Parität, oder mehrstellige Paritäten, für verschiedene Listen vereinbart werden.

Figur 5 zeigt ein erfindungsgemäßes Verfahren zur Berechnung einer zweiten Prüfsumme, dabei werden zur Berechnung Inhalte vorhergehender Elemente der Liste verwendet. Dargestellt sind die Zeiger P1, P2, P3 und P4 mit ihren jeweiligen Prüfsummen die in y-Bits gespeichert sind. Der Wert der zweiten Prüfsumme für P4 hängt beispielsweise von den Prüfsummenwerte der vorhergehenden Zeiger oder von den Zeigerwerten der vorhergehenden Zeiger ab. In einer weiteren Ausführungsform wird der Prüfsummenwert aus einer Kombination beider berechnet.

Figur 6 zeigt ein weiteres erfindungsgemäßes Verfahren zur Berechnung einer zweiten Prüfsumme, dabei hängt der Prüfsummenwert von der Anzahl der vorhergehenden Elemente ab. So kann die Prüfsumme beispielsweise die Anzahl der vorhergehenden Elemente, gegebenenfalls eine Modulo-Zahl der vorhergehenden Elemente in Abhängigkeit der Länge der Prüfsumme, sein. In Figur 6 sind die Zeiger Pointer 1, Pointer 2, Pointer 3 und Pointer N mit ihren jeweiligen Prüfsummenfeldern S1, S2, S3 und SN. Die Prüfsummenfelder enthalten eine Numerierung der Zeiger, so daß in dem Feld S1 eine "1", in S2 eine "2" und in SN die Zahl "N" gespeichert ist.

In einer weiteren Ausführungsform ist in dem Prüfsummenfeld die Nummer des Zeigers nach eine Modulo Operation gespeichert. Beispielsweise enthält das Feld SN die Zahl N modulo 16 bei vier Bit Länge des Prüfsummenfeldes.

In einer weiteren Ausführungsform der Erfindung, ist die zweite Prüfsumme eine Listennummer.

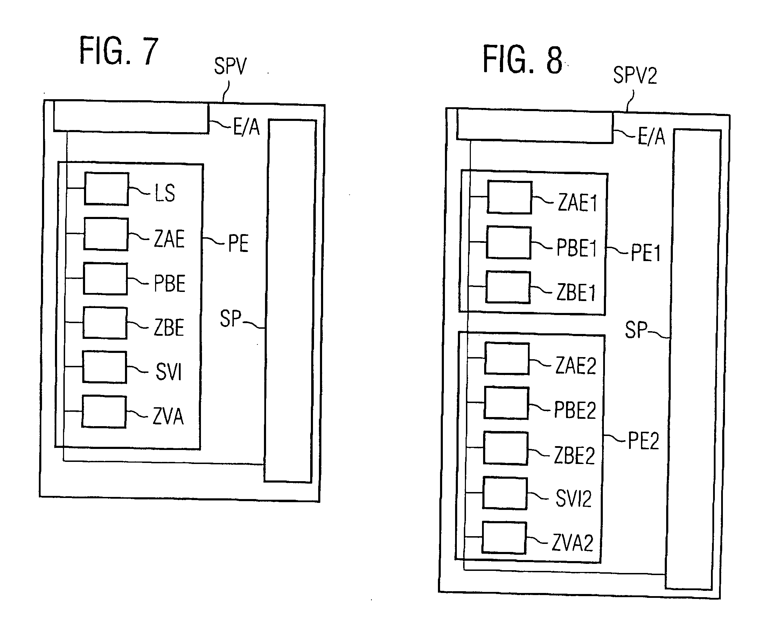

Figur 7 zeigt eine erfindungsgemäße Speichervorrichtung SPV mit einer gemeinsamen Prüfeinheit PE. Die Speichervorrichtung SPV enthält eine Ein/Ausgabeeinheit E/A, einen Speicher SP und eine gemeinsame Prüfeinheit PE zur Bestimmung und Überprüfung von Prüfsummen über einen Zeigerwert und zur Überprüfung ob ein Zeigerwert auf ein nachfolgendes Element der Liste beziehungsweise das Ende der Liste zeigt, oder nicht. Ein Register zur Bestimmung von Zeigerwerten ist in der Ein/Ausgabeeinheit integriert.

Im folgenden wird die Funktion der Speichervorrichtung zum besseren Verständnis am Beispiel der Speicherung von asynchronen Transfermodus Zellen erläutert. Die Erfindung ist nicht auf diesen Einsatz beschränkt und funktioniert für die Speicherung beliebiger verketteter Listen die beliebige Inhalte speichern können.

Eine asynchronen Transfermodus Zelle wird von der Ein/Ausgabeeinheit E/A empfangen und einer verketteten Liste zugeordnet. Eine derartige Zuordnung erfolgt beispielsweise in Abhängigkeit von sogenannten Diensteklassen (service classes). Das in der Ein/Ausgabeeinheit integrierte Register weist dem Zeiger folgenden Wert zu "01011001".

Die Ein/Ausgabeeinheit E/A ordnet die Zelle einer ersten verketteten Liste zu.

Die Logikschaltung LS ermittelt die der ersten verketteten Liste zugeordnete Vorschrift zur Berechnung einer Prüfsumme und stellt die Zeigerwertaufteilungseinheit ZAE entsprechend ein.

In einer bevorzugten Ausrührungsform erfolgt diese Einstellung durch die Auswahl einer Folge von logischen Gattern aus einer Mehrzahl von logischen Gattern.

In einer weiteren Ausführungsform erfolgt die Einstellung durch die Auswahl von Bitmasken.

Die Logikschaltung LS stellt fest, daß die Prüfsumme durch die Paritätsberechnungseinheit PBE als Parität und nicht durch die Berechnungseinheit ZBE als eine zyklische Blockprüfungssumme berechnet wird.

Grundsätzlich können weitere Verfahren zur Berechnung von Prüfsummen verwendet werden, in dem Beispiel wurde zur besseren Verständlichkeit das Verfahren auf diese beiden Möglichkeiten beschränkt.

In dem Beispiel wird die drei Bit Prüfsumme als gerade Parität berechnet, wobei das erste Bit über die erste Hälfte des Zeigerwertes und das zweite Bit über die zweite Hälfte des Zeigers berechnet wird. Für die beiden Bits ergibt sich somit folgender Wert "00". Das dritte Bit wird über den gesamten Zeigerwert des Elementes und den Zeigerwert seines Vorgängers berechnet. Dazu fragt die Paritätsberechnungseinheit den Zeigerwert des vorhergehenden Elements der ersten verketteten Liste vom Speicher zur Speicherung von Inhalten vorhergehender Elemente SVI ab. Der Speicher liefert folgenden Wert für den Vorgänger "01110011". Damit hat das dritte Bit den Wert "1" und die Prüfsumme hat den Wert "001".

In einer anderen Ausführungsform wird mindestens ein Bit unter Verwendung der Anzahl vorhergehender Elemente berechnet. Dazu wird die Anzahl der vorhergehenden Elemente für eine verkettete Liste aus dem Zähler ZVA zur Speicherung der Elementeanzahl verketteter Listen ausgelesen.

Eine weitere ATM Zelle wird in der Ein/Ausgabeeinheit E/A empfangen und einer zweiten verketteten Liste zugeordnet. Das Register weist dem Zeiger den Wert "10000111" zu. Die Logikschaltung LS wählt die der zweiten verketteten Liste zugeordnete Vorschrift zur Berechnung der Prüfsumme aus, und stellt die Zeigeraufteilungseinheit ZAE entsprechend ein.

Für die zweite verkettete Liste wird eine drei Bit Prüfsumme als gerade Parität berechnet, wobei das erste Bit über die Bits an ungeraden Stellen des Zeigerwertes und das zweite Bit über die Bits an geraden Stellen des Zeigerwertes berechnet wird. Für die ersten beiden Bits ergibt sich somit der Wert "00". Das dritte Bit wird als Modulo Zahl über die Anzahl der Elemente in der zweiten verketteten Liste berechnet. Dazu wird die Anzahl aus dem Zähler ZVA zur Speicherung der Elementeanzahl verketteter Listen ausgelesen und in der Paritätsberechnungseinheit verarbeitet. Da nur ein Bit zur Speicherung verwendet wird, wird eine Modulo 2 Operation durchgeführt. Das Element ist das siebte Element der zweiten verketteten Liste, damit ergibt sich der Wert "1" für das dritte Prüfbit. Die Prüfsumme hat somit ebenfalls den Wert "001".

Durch eine kurzzeitige Spannungsspitze sind Zuordnungen so verändert worden, daß das Element der ersten Liste der zweiten Liste zugeordnet wurde und umgekehrt. Die Elemente werden ausgelesen und geprüft. Das Element, das ursprünglich zur ersten Liste gehörte hat den Wert "01011001" mit den Prüfbits "001". Es wird nun nach der Vorschrift der zweiten verketteten Liste überprüft. Dabei wird festgestellt, daß das erste Prüfbit den Wert "1" haben müßte, wenn der Zeigerwert korrekt wäre. Der Fehler wird erkannt. Das Element, das ursprünglich zur zweiten Liste gehörte hat den Wert "10000111" mit den Prüfbits "001". Auch in diesem Fall weicht bereits das erste Prüfbit ab, und der Fehler wird erkannt.

Die Erkennung fehlerhafter Listenzuordnungen erfolgt hier implizit durch die abweichenden Ergebnisse bei der Prüfsummenberechnung. Da verschiedene Verfahren für verschiedene verkettete Listen verwendet werden, werden fehlerhafte Zuordnungen mit einer besonders hohen Wahrscheinlichkeit erkannt.

In einem anderen Ausführungsbeispiel besteht die Prüfsumme nur aus den ersten beiden Prüfbits.

Figur 8 stellt ein Blockschema einer erfindungsgemäßen Speichervorrichtung mit einer ersten und einer zweiten Prüfeinheit dar.

Die Speichervorrichtung beinhaltet eine Ein/Ausgabeeinheit E/A die ein Register beinhaltet, einen Speicher SP, eine erste Prüfeinheit PE1 und eine zweite Prüfeinheit PE2.

Die erste Prüfeinheit PE1 beinhaltet eine Zeigeraufteilungseinheit ZAE1, eine Paritätsberechnungseinheit PBE1 und eine Berechnungseinheit zur Berechnung zyklischer Blockprüfsummen ZBE1.

Die zweite Prüfeinheit PE2 beinhaltet eine Zeigeraufteilungseinheit ZAE2, eine Paritätsberechnungseinheit PBE2, eine Berechnungseinheit zur Berechnung zyklischer Blockprüfsummen ZBE2, einen Speicher zur Speicherung von Inhalten vorhergehender Elemente verketteter Listen SVI2 und einen Zähler zur Speicherung der Anzahl vorhergehender Elemente verketteter Listen ZVA2.

Wird ein Element einer verketteten Liste gespeichert, so berechnet die erste Prüfeinheit eine erste Prüfsumme über den Zeigerwert des Elements. Die zweite Prüfeinheit berechnet eine zweite Prüfsumme, die zur Überprüfung, ob ein Element der verketteten Liste zugeordnet wurde in der es aufgefunden wurde, dient.

In einer Ausführungsform der Erfindung, wird die Berechnung mindestens einer Prüfsumme durch ein Computerprogramm durchgeführt.

In einer weiteren Ausführungsform wird die Berechnung mindestens einer Prüfsumme durch ein Softwaremodul durchgeführt.

In einer bevorzugten Ausführungsform wird die Berechnung mindestens einer Prüfsumme durch ein ASIC ( Application Specific Integrated Circuit) durchgeführt.

## Patentansprüche

1. Verfahren zur Berechnung von Prüfsummen für Zeigerwerte in Elementen verketteter Listen, für ein System zur Speicherung einer Mehrzahl verketteter Listen, mit folgenden Schritten:
- Berechnung mindestens einer ersten Prüfsumme zur Überprüfung des Zeigerwertes,
- Berechnung mindestens einer zweiten Prüfsumme zur Überprüfung ob der Zeigerwert ein Element der Liste oder das Ende der Liste oder keines von beiden indiziert.

2. Verfahren nach Anspruch 1, bei der die zweite Prüfsumme für jede verkettete Liste nach einer anderen Vorschrift berechnet wird.

3. Verfahren nach Anspruch 1, bei der die erste und zweite Prüfsumme in einer gemeinsamen Prüfsumme realisiert sind, indem zur Berechnung der ersten Prüfsumme für jede verkettete Liste eine andere Vorschriften zur Berechnung der Prüfsumme verwendet wird.

4. Verfahren nach einem der Ansprüche 1, 2 oder 3, bei dem eine mindestens zweiteilige gemeinsame Prüfsumme errechnet wird, bei der jeder Teil der Prüfsumme aus jeweils einem Teil des Zeigerwertes errechnet wird, und die Aufteilung für verschiedene verkettete Listen verschieden ist.

5. Verfahren nach einem der Ansprüche 1 bis 4, bei dem mindestens eine Prüfsumme oder ein Prüfsummenteil eine Parität ist.

6. Verfahren nach einem der Ansprüche 1 bis 5, bei dem mindestens eine Prüfsumme oder ein Prüfsummenteil durch eine zyklische Blockprüfung bestimmt wird.

7. Verfahren nach einem der Ansprüche 1 bis 6, bei dem eine Prüfsumme nach einer Vorschrift berechnet wird, die Inhalte vorhergehender Elemente mit einbezieht.

8. Verfahren nach einem der Ansprüche 1 bis 7, bei dem eine Prüfsumme nach einer Vorschrift berechnet wird, die die Anzahl vorhergehender Elemente mit einbezieht.

9. Speichervorrichtung (SPV, SPV2) zur Speicherung einer Mehrzahl von verketteten Listen mit jeweils mindestens einem Element, das mindestens einen Zeiger enthält wobei der Zeiger entweder eine Speicherstelle, an der ein nachfolgendes Element der Liste gespeichert ist, oder das Ende der Liste indiziert, wobei die Speichervorrichtung ein Register (103) zur Bestimmung von Zeigerwerten, eine Ein/Ausgabeeinheit (E/A), mindestens einen Speicher (SP) und eine erste Prüfeinheit (PE1) zur Bestimmung und Überprüfung einer Prüfsumme über den Zeigerwert enthält, **gekennzeichnet durch**
eine zweite Prüfeinheit (PE2) zur Berechnung und Überprüfung einer Prüfsumme zur Überprüfung ob ein Zeigerwert auf ein nachfolgendes Element der Liste, das Ende der Liste oder keines von beidem zeigt.

10. Speichervorrichtung gemäß Anspruch 9, bei der mindestens eine Prüfeinheit eine Logikschaltung (LS) enthält, die für verschiedene verkettete Listen verschiedene Vorschriften zur Bestimmung oder Überprüfung einer Prüfsumme auswählt.

11. Speichervorrichtung gemäß Anspruch 9 oder 10, bei der die erste und die zweite Prüfeinheit in einer gemeinsamen Prüfeinheit (PE) umgesetzt sind.

12. Speichervorrichtung nach Anspruch 9, 10 oder 11, bei der mindestens eine der Prüfeinheiten (PE, PE1, PE2) eine Zeigerwertaufteilungseinheit (ZAE, ZAE1, ZAE2) enthält.

13. Speichervorrichtung nach einem der Ansprüche 9 bis 12, bei der mindestens eine der Prüfeinheiten (PE, PE1, PE2) eine Paritätsberechnungseinheit (PBE, PBE1, PBE2) enthält.

14. Speichervorrichtung nach einem der Ansprüche 9 bis 13, bei der mindestens eine der Prüfeinheiten (PE, PE1, PE2) eine Berechnungseinheit (ZBE, ZBE1, ZBE2) zur Berechnung einer zyklischen Blockprüfsumme enthält.

15. Speichervorrichtung nach einem der Ansprüche 9 bis 14, bei der mindestens eine der Prüfeinheiten (PE, PE1, PE2) einen Speicher (SVI, SVI2) zur Speicherung von Inhalten vorhergehender Elemente enthält.

16. Speichervorrichtung nach einem der Ansprüche 9 bis 15, bei der mindestens eine der Prüfeinheiten einen Zähler (ZVA, ZVA2) zur Speicherung der Elementeanzahl verketteter Listen enthalten.

17. Speichervorrichtung nach einem der Ansprüche 9 bis 16, zur Zwischenspeicherung von asynchronen Transfermodus Zellen in einer asynchronen Transfermodus Vermittlungsstelle.

18. Verwendung eines Verfahrens nach einem der Ansprüche 1 bis 9 in einer asynchronen Transfermodus Vermittlungsstelle zur Sicherung von zwischengespeicherten asynchronen Transfermodus Zellen.

19. Computerprogramm auf einem Datenträger oder in einer Form, die in einen Arbeitsspeicher eines Computers geladen werden kann, zur Berechnung von Prüfsummen nach einem der Verfahren gemäß eines der Ansprüche 1 bis 9.
